(19) Europäisches Patentamt

European Patent Office

Office européen des brevets

(11) **EP 0 942 196 B1**

(12) **EUROPÄISCHE PATENTSCHRIFT**

(45) Veröffentlichungstag und Bekanntmachung des Hinweises auf die Patenterteilung:
**18.09.2002 Patentblatt 2002/38**

(51) Int Cl.$^7$: **F16F 15/32**, D06F 37/20

(21) Anmeldenummer: **98123751.4**

(22) Anmeldetag: **14.12.1998**

(54) **Vorrichtung zum Auswuchten von rotierenden Körpern**

Device for balancing rotating bodies

Dispositif pour équilibrer des corps rotatifs

(84) Benannte Vertragsstaaten:
**CH DE ES FR GB IT LI**

(30) Priorität: **12.03.1998 DE 19810705**

(43) Veröffentlichungstag der Anmeldung:
**15.09.1999 Patentblatt 1999/37**

(73) Patentinhaber: **Miele & Cie. GmbH & Co.
D-33332 Gütersloh (DE)**

(72) Erfinder: **Beier, Dominic
33330 Gütersloh (DE)**

(56) Entgegenhaltungen:
EP-A1- 0 810 389          EP-A2- 0 811 717
WO-A1-98/09096          US-A- 4 075 909
US-A- 5 111 713

## Beschreibung

Die Erfindung betrifft eine Vorrichtung zum Auswuchten von rotierenden Körpern, insbesondere von Waschmaschinentrommeln, mit mindestens einer mit dem Körper umlaufenden, konzentrisch zu seiner Rotationsachse angeordneten kreisringförmigen Laufbahn, innerhalb der mindestens zwei Gewichte angeordnet sind, wobei die Laufbahn mit einem viskosen Dämpfungsmittel gefüllt ist, und mit einer Meßvorrichtung zur Bestimmung der Größe und der Position der Unwucht des Körpers. Daneben betrifft die Erfindung ein Verfahren zum Auswuchten der Trommel einer Waschmaschine während des Wasch- oder Schleuderbetriebs unter Verwendung einer solchen Vorrichtung.

Eine Vorrichtung der eingangs erwähnten Art ist beispielsweise aus der EP 0 640 192 B1 bekannt. Dabei handelt es sich um einen sogenannten Kugelauswuchter, bei dem innerhalb der Laufbahn Kugeln frei beweglich angeordnet sind.

Der Nachteil eines derartigen Kugelauswuchters besteht darin, daß er seine kompensatorische Wirkung erst oberhalb der Resonanzfrequenz bzw. kritischen Drehzahl des Systems entfaltet, in dem der rotierende Körper gelagert ist (s. bspw. Kellenberger: Elastisches Wuchten; Springer Verlag; S. 402f). Im unterkritischen Drehzahlbereich kann die vorhandene Unwucht bei ungünstiger Lage der Gewichte sogar verstärkt werden.

Des weiteren muß bei einer horizontalen Rotationsachse des Körpers sichergestellt werden, daß die Kugeln mit der Laufbahn rotieren und nicht aufgrund ihrer Schwerkraft im unteren Bereich der Bahn abrollen. Hierzu wird in der EP 0 640 192 B1 vorgeschlagen, die Laufbahn mit einem Stoff zu füllen, der aufgrund der durch ihn ausgeübten Reibkraft die Kugeln zum Anfang der Rotation mitnimmt. Hier hat sich ein viskoses Dämpfungsmittel, insbesondere Öl, bewährt, da Flüssigkeiten mit geringer Viskosität den gewünschten Effekt nicht erbringen und hochviskose Massen oder Sand die Ausrichtung der Kugeln im überkritischen Bereich stören.

In der nachveröffentlichten und nicht gemäß Art. 54 EPÜ als Stand der Technik geltenden deutschen Patentanmeldung 19718321.2-13 ist ein Verfahren zum Auswuchten der Trommel einer Waschmaschine unter Verwendung eines Kugelauswuchters beschrieben, bei dem die Trommel zunächst auf eine Drehzahl oberhalb der Anlegedrehzahl beschleunigt wird. Dann wird die Position einer eventuell ausgebildeten Wäscheunwucht sensiert. Die Viskosität des Dämpfungsmittels ist derart dimensioniert, daß die Kugeln in diesem Drehzahlbereich noch frei abrollen. Anschließend wird die Trommel bei einer bestimmten, zuvor ermittelten Lage von Unwucht und Kugeln stark beschleunigt, so daß die Kugeln mitgerissen werden. Es soll damit erreicht werden, daß sich Unwucht und Kugelschwerpunkt gegenüberliegen und somit auch beim Durchlaufen des kritischen Drehzahlbereichs kompensieren. Der Nachteil dieses Verfahrens besteht in der starken Temperaturabhängigkeit der Viskosität des Dämpfungsmittels. Hierdurch ist insbesondere bei Waschmaschinen mit unterschiedlichen Laugentemperaturen zwischen 20°C und 100°C eine genaue Bestimmung des Drehzahlverhaltens solcher Dämpfungsmittel nicht möglich. Außerdem entstehen durch das Abrollen der Kugeln während des Waschbetriebs starke Geräusche.

In der nicht veröffentlichten deutschen Patentanmeldung 19757130.1 wird vorgeschlagen, die Laufbahn des Kugelauswuchters mit einem hochviskosen Dämpfungsmittel zu füllen, das die Gewichte bereits bei Waschdrehzahl mitnimmt. Bei einer mit einem solchen Auswuchter ausgestatteten Waschmaschine wird dann die Trommel aus einer Position beschleunigt, bei der die Wäsche gezielt gegenüber den Gewichten eine Unwucht ausbildet. Die Dimensionierung der Viskosität des Dämpfungsmittel ist dann relativ unkritisch, es muß nur sichergestellt werden, daß auch bei der Maximaltemperatur von ca. 100 °C die Gewichte bei Waschdrehzahl mitgenommen werden. Der Nachteil dieses Auswuchtverfahrens besteht darin, daß die Waschtrommel im Waschbetrieb permanent mit einer durch die Gewichte erzeugten Unwucht gedreht wird. Dies führt zu einer erhöhten Belastung der Trommellagerung. Ein weiterer Nachteil eines solchen Auswuchters besteht darin, daß bei unterkritischen Schleuderdrehzahlen die Gewichte immer in dichtester Packung beieinanderliegen und deshalb immer eine maximale Unwucht erzeugen. Bei geringen Wäscheunwuchten kommt es deshalb zur Überkompensation, d. h. der kritische Drehzahlbereich wird mit einer Unwucht durchfahren.

Der Erfindung stellt sich somit das Problem, eine Vorrichtung zum Auswuchten von rotierenden Körpern zu offenbaren, die vorhandene Unwuchten nahezu über das gesamte Drehzahlprofil exakt ausgleicht.

Erfindungsgemäß wird dieses Problem durch ein mit den im Patentanspruch 1 angegebenen Merkmalen gelöst. Vorteilhafte Ausgestaltungen und Weiterbildungen der Erfindung ergeben sich aus den nachfolgenden Unteransprüchen.

Eine erfindungsgemäß ausgebildete Auswuchtvorrichtung kommt in vorteilhafter Weise zur Auswuchtung einer Waschmaschinentrommel zum Einsatz. Die Anordnung der Laufbahnen einer Unwuchtkompensationsvorrichtung an den Deckflächen der Innentrommel eines Waschautomaten ist möglich. Die Erfindung bezieht sich auch auf ein Verfahren nach den Ansprüchen 5 und 6.

Ein Ausführungsbeispiel der Erfindung ist in den Zeichnungen rein schematisch dargestellt und wird nachfolgend näher beschrieben. Es zeigt

| Figur 1 | einen Ausschnitt aus einer erfindungsgemäß ausgebildeten Auswuchtvorrichtung; |
| --- | --- |
| Figur 2 | ein Zeitdiagramm der Kraftimpulse einer Bremseinrichtung; |

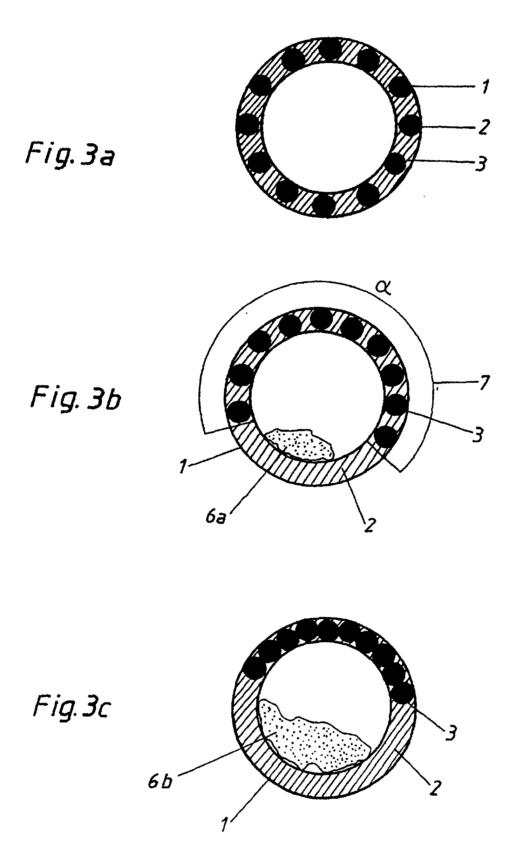

Figur 3a-c     die Anordnung der Gewichte in der Laufbahn eines Kugelauswuchters bei unterschiedlich großen Unwuchtszuständen

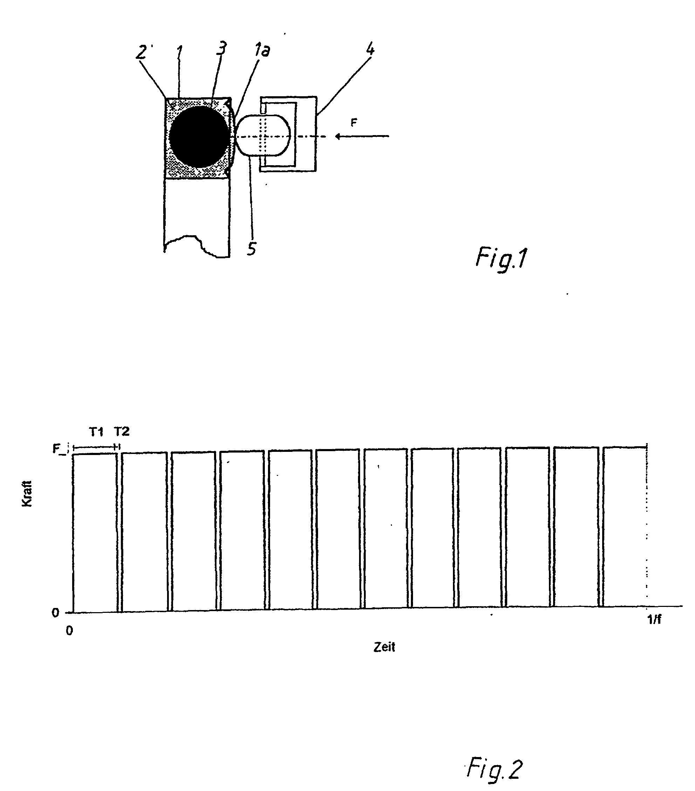

Figur 1 zeigt deshalb nur einen Ausschnitt aus einer Auswuchtvorrichtung und der Bremseinrichtung (4;5). Die Laufbahn (1) ist in bekannter Weise mit einem viskosen Dämpfungsmittel (2) gefüllt. In der Laufbahn sind bewegliche Ausgleichsgewichte (3) angeordnet. Die Viskosität des Dämpfungsmittels (2) und das Spiel der Gewichte (3) in der Laufbahn (1) sind derart dimensioniert, daß die Gewichte (2) bei einer Drehzahl unterhalb der Waschdrehzahl mitgenommen werden.

Die Laufbahn ist mindestens mit einer elastischen, nach außen vorgespannten Wand (1a) ausgestattet, die bei kleiner Trommeldrehzahl unterhalb der kritischen Drehzahl mit einem Kraftimpuls F einer Bremseinrichtung (4;5) beaufschlagt werden kann. Die Bremseinrichtung (4;5) ist in einer stationären Halterung (4) angeordnet. Der Kraftimpuls F wird elektromagnetisch oder hydraulisch von außen über eine Andruckrolle (5), um die Reibkräfte an der Wand (1a) gering zu halten, oder elektromagnetisch durch die Waschmaschinensteuerung übertragen. Er bewirkt eine örtlich begrenzte Verengung (das Spiel zwischen Ausgleichsgewichten (3) und Wand (1a) beträgt nur wenige zehntel Millimeter) der Laufbahn (1) für die Ausgleichsgewichte (3), so daß diese in ihrer Bewegung gebremst werden. Mit dieser Einrichtung (4;5) lassen sich die Ausgleichsgewichte (3) in Abhängigkeit der Größe der Wäscheunwucht und deren Position in der Trommel gezielt im Umwuchtkompensationsring anordnen, womit zumindest eine Teilauswuchtung erreicht wird.

Zur Ermittlung der Wäscheunwucht müssen entsprechende Meßmittel vorhanden sein. Es kann beispielsweise der der Trommeldrehzahl entsprechende Signalanteil eines Drehzahlsignals der Trommel oder des Antriebsmotors verwendet werden. Wahlweise oder zusätzlich kann auch ein Weg- oder Beschleunigungssignal des Laugenbehälters als Positionsgeber verwendet werden. Hierbei wird von der Tatsache Gebrauch gemacht, daß durch die Wäscheunwucht periodische Drehzahl-, Weg- und Beschleunigungsschwankungen hervorgerufen werden. Durch geeignete Signalanalyse, z.B. Filterung der vorgenannten Signale kann somit auf einfache Weise und unter Ausnutzung bereits vorhandener Sensoren (Tacho, Wegsensor, Beschleunigungssensor) die Größe und die Position des Gewichtsschwerpunkes der Unwucht bestimmt werden.

Zusätzlich kann zur exakteren Verteilung der Ausgleichsgewichte eine Meßeinrichtung (beispielsweise auf einem Magnetfeldsensor basierend) verwendet werden, mit der die Position der Ausgleichsgewichte erfaßt wird.

Im Waschbetrieb mit Drehzahlen unterhalb der Anlegedrehzahl liegt die Wäsche noch nicht am Trommelmantel an und bildet deshalb keine Unwucht aus. Es kommt deshalb darauf an, daß die Ausgleichsgewichte (2) am Umfang gleichmäßig verteilt sind und möglichst gut mit umlaufen (s. Fig. 3a). Die Verteilung kann so vollzogen werden, daß für einen errechneten, gleichmäßigen Gewichtsabstand zeitlich entsprechende Kraftimpulse auf die elastische Wand (1a) der Laufbahn gegeben werden. Nach wenigen Trommelumdrehungen bei kleiner Trommeldrehzahl (unterhalb der Waschdrehzahl) ist eine annähernd optimale Verteilung der Ausgleichsgewichte (3) erreicht, so daß dann auf Waschdrehzahl umgeschaltet werden kann. Aus energetischer Sicht verbietet sich bei diesem System ein Reversieren der Trommel in kurzen Zeitabständen, da neben der Trommel auch das Ausgleichssystem immer wieder beschleunigt werden muß. Mittels der oben angegebenen Sensorik läßt sich erkennen, ob sich die Wäsche aufgewickelt hat. Nur dann wäre eine Umkehr der Drehrichtung erforderlich.

In Abbildung 2 ist eine Folge von Kraftimpulsen F dargestellt, bei der sich eine gleichmäßige Verteilung der Ausgleichsgewichte ergibt. Im Folgenden soll das Verfahren am Beispiel von Ausgleichsgewichten (3) in Form von Kugeln (3) näher beschrieben werden. Es läßt sich aber auch auf andere Formen von Ausgleichsgewichten (3) übertragen. Während der Zeit T, wird die elastische Wand der mit der Frequenz f umlaufenden Laufbahn durch die zum Bremsen der Kugeln (3) erforderliche Kraft F beaufschlagt und somit die an der stationären Einrichtung vorbeilaufende Kugel für einen entsprechenden Drehwinkel der Laufbahn (1) festgehalten. Danach folgt eine Zeit $T_2$, in der die Krafteinwirkung ausbleibt und die verzögerte Kugel weiter im Kompensationsring mit umlaufen kann. Da die Zeit $T_2$ sehr kurz ist, kann eine folgende Kugel (3) durch den nächsten Kraftimpuls F gehalten werden und ebenfalls in der Laufbahn (1) verschoben werden. Somit werden nach und nach alle Kugeln (3) gleichmäßig am Umfang verteilt.

Die Zeiten $T_1$ und $T_2$ werden aus der Trommeldrehzahl (ausgedrückt durch die Frequenz f) und der Geometrie der Anordnung bestimmt:

$$T_1 = \frac{\frac{1}{f}\,\frac{2\pi r_m}{n_k} - d_k}{2\pi r_m} \qquad T_2 = \frac{1}{f} \cdot \frac{d_k}{2\pi r_m}$$

mit

f = Frequenz
$d_k$ = Kugeldurchmesser
$n_k$ = Anzahl der Kugeln (3)
$r_m$ = mittlerer Radius der Laufbahn (1)

Im Schleuderbetrieb lassen sich die Kugeln (3) bei kleinen Drehzahlen oberhalb der Anlegedrehzahl, bei der die Wäsche schon am Trommelmantel anliegt, so positionieren, daß bei angepaßter Radialbeschleunigung der Trommel ein nahezu unwuchtfreier Schleuderhochlauf durch die kritische Drehzahl erreicht werden

kann. Die Dauer $T_1$ der Kraftimpulse F und die Zeit $T_2$ zwischen den Impulsen berechnet sich dabei aus der ermittelten Masse und Lage der Unwucht, der Drehzahl und der Geometrie der Anordnung.

Zunächst wird die Trommel für eine bestimmte Zeit auf eine Drehzahl gebracht , die zwischen der Waschdrehzahl und der kritischen Drehzahl liegt. Die Amplitude des Laugenbehälters wird dabei überwacht und begrenzt. Ziel dieser Maßnahme ist eine Vorentwässerung der Wäsche und damit eine Verkleinerung der Unwucht. Danach wird die Trommel auf eine Drehzahl größer der Anlegedrehzahl der Wäsche gebracht und die Masse und Lage der Unwucht mit den o. g. bekannten Verfahren bestimmt.

1. Beispiel: Leere Trommel oder Trommel ohne Unwucht (Figur 3a)

Wird keine Unwucht sensiert, erfolgt eine gleichmäßige Verteilung der Kugeln (3) wie im Waschbetrieb.

2. Beispiel: Trommel mit mittlerer Unwucht (6a) (Figur 3b)

Bei einer mittleren Unwucht wird durch die Waschmaschinensteuerung zunächst der Winkel $\alpha$ des Segments (7) bestimmt, über das die Kugeln (3) verteilt werden müssen. Diese werden daraufhin an einem Begrenzungspunkt des ermittelten Segmentes (7) gebremst und durch Kraftimpulse, deren zeitliche Abfolge sich aus der Trommeldrehzahl, der Geometrie der Anordnung und dem berechneten Verteilungswinkel $\alpha$ ergibt, über das ganze Segment (7) verteilt.

3. Beispiel: Trommel mit sehr hoher Unwucht (6b) (Figur 3c)

Durch Bremsung der Kugeln (3) werden diese als Block in eine zur Unwucht gegenüber liegende Position gebracht. In diesem Fall muß nur eine Kugel über eine längere Zeit gebremst werden, bis sich der Schwerpunkt der Kugeln (3) gegenüber der Wäscheunwucht (6b) befindet.

Wie schon erwähnt, können die Positionen der Kugeln (3) sowohl bei der Verteilung im Waschbetrieb, als auch im Schleuderbetrieb, mit Hilfe einer zusätzlichen Meßeinrichtung (beispielsweise auf Basis eines Magnetfeldsensors) kontrolliert und gegebenenfalls optimiert werden.

Durch den Einsatz einer erfindungsgemäß ausgebildeten Auswuchtvorrichtung in Waschmaschinen bzw. durch Anwendung des erfindungsgemäß ablaufenden Auswuchtverfahrens bieten sich folgende Vorteile:

• Ein fast unwuchtfreier Schleuderhochlauf benötigt keine bzw. nur noch eine geringe Dämpfung des schwingenden Systems. Somit können die serienüblichen Dämpfer eingespart werden. Als Sicherheit könnten einfach Reibbeläge mit hoher Eingendämpfung, parallel zu den Gehäusewänden im geringen Abstand zum Laugenbehälter angebracht werden, die dessen Bewegung bei zu großer unwuchtbedingter Auslenkung in horizontaler und vertikaler Richtung dämpfen.

• Eine Beladungsmessung mittels eines am Laugenbehälter angeordneten Wegsensors wird dann nicht mehr durch die Dämpfer beeinträchtigt, da der Laugenbehälter frei schwingt.

• Die Unwuchtmessung wird nicht mehr durch Dämpfer beeinflußt.

• Auf Zusatzmassen am Laugenbehälter zur Dämpfung des schwingenden Systems kann verzichtet werden.

• Der Laugenbehälter und die Innentrommel können hierdurch im Durchmesser und somit in ihrem Volumen vergrößert werden.

• Der Türdichtring wird nicht mehr der unwuchtbedingten Beanspruchung ausgesetzt und kann durch Formanpassung in der Masse reduziert werden.

**Patentansprüche**

1. Vorrichtung zum Auswuchten von rotierenden Körpern, insbesondere von Waschmaschinentrommeln, mit mindestens einer mit dem Körper umlaufenden, konzentrisch zu seiner Rotationsachse angeordneten kreisringförmigen Laufbahn (1), innerhalb der mindestens zwei Gewichte (3) angeordnet sind, wobei die Laufbahn (1) mit einem viskosen Dämpfungsmittel (2) gefüllt ist, und mit einer Meßvorrichtung zur Bestimmung der Größe und der Position der Unwucht des Körpers,
**gekennzeichnet durch** eine stationär angeordnete Bremseinrichtung (4,5), mit welcher mindestens ein Gewicht (3) in einem von der Größe und der Position der Unwucht abhängigen Drehwinkel der Laufbahn (1) lageveränderbar ist.

2. Vorrichtung zum Auswuchten von rotierenden Körpern nach Anspruch 1,
**dadurch gekennzeichnet,**
**daß** die Bremseinrichtung als Druckvorrichtung ausgebildet ist,
**daß** die Laufbahn (1) in einem umlaufenden Wandabschnitt (1a) elastisch ausgebildet ist und
**daß** durch die drehfest zur Lagerung des Körpers angeordnete Druckvorrichtung (5) der Querschnitt der Laufbahn (1) verringerbar ist.

3. Vorrichtung zum Auswuchten von rotierenden Körpern nach einem der Ansprüche 1 oder 2, **gekennzeichnet durch** einen Magnetfeldsensor zur Erfassung der Position der Gewichte (3).

4. Vorrichtung zum Auswuchten der in einem Laugenbehälter rotierenden Trommel einer Waschmaschine nach einem der Ansprüche 1 oder 3,
   **dadurch gekennzeichnet,**
   **daß** die Bremseinrichtung als Druckvorrichtung ausgebildet ist,
   **daß** die mindestens eine Laufbahn (1) an mindestens einer der Deckflächen der Trommel angeordnet ist und **daß** die Druckvorrichtung (5) an der entsprechenden Innenseite der Deckfläche des Laugenbehälters angeordnet ist und **daß** die Viskosität des Dämpfungsmittels (2) und die Größe der Gewichte (3) derart dimensioniert sind, **daß** sie bei einer Drehzahl unterhalb der Waschdrehzahl mitgenommen werden.

5. Verfahren zum Auswuchten der Trommel einer Waschmaschine während des Waschbetriebs unter Verwendung einer Vorrichtung nach Anspruch 4,
   **dadurch gekennzeichnet,**
   **daß** vor dem Drehen der Trommel mit Waschdrehzahl die Druckvorrichtung die Gewichte (3) gleichmäßig auf dem Umfang der Laufbahn verteilt.

6. Verfahren zum Auswuchten der Trommel einer Waschmaschine während des Schleuderbetriebs unter Verwendung einer Vorrichtung nach Anspruch 4, **gekennzeichnet durch** folgende Verfahrensschritte:

   - Beschleunigen der Trommel auf eine Drehzahl, bei der die Wäsche am Trommelmantel anliegt;
   - Sensieren der Größe und der Position der **durch** schlechte Wäscheverteilung hervorgerufenen Unwucht;
   - Bremsen der Gewichte (3), bis diese Positionen einnehmen, in denen das Gesamtmoment der Gewichte (3) und das Unwuchtmoment bezüglich der Rotationsachse der Trommel annähernd im Geleichgewicht stehen;
   - Beschleunigen der Trommel auf eine Drehzahl oberhalb der kritischen Drehzahl.

## Claims

1. Apparatus for balancing rotating bodies, more especially washing machine drums, said apparatus having at least one circular track (1), which rotates with the body and is disposed concentrically relative to the axis of rotation of said body, at least two weights (3) being disposed within said track, the track (1) being filled with a viscous sound-absorbing means (2), and said apparatus having a measuring device to determine the size and the position of the imbalance phenomenon of the body, **characterised by** a stationary retarding mechanism (4,5), by means of which at least one weight (3) is positionally variable within an angle of rotation of the track (1), which angle is dependent on the size and the position of the imbalance phenomenon.

2. Apparatus for balancing rotating bodies according to claim 1, **characterised in that** the retarding mechanism is in the form of a pressing device, and **in that** the track (1) is resilient in one circumferential wall portion (1a), and **in that** the cross-section of the track (1) is reducible by the pressing device (5), which is disposed in a rotation-resistant manner to support the body.

3. Apparatus for balancing rotating bodies according to one of claims 1 or 2, **characterised by** a magnetic field sensor for detecting the position of the weights (3).

4. Apparatus for balancing the drum of a washing machine, which drum rotates in a washing liquid container, according to one of claims 1 or 3, **characterised in that** the retarding mechanism is in the form of a pressing device, **in that** the at least one track (1) is disposed on at least one of the top surfaces of the drum, and **in that** the pressing device (5) is disposed on the corresponding inside of the top surface of the washing liquid container, and **in that** the viscosity of the sound-absorbing means (2) and the size of the weights (3) are so dimensioned that they are entrained at a speed below the washing speed.

5. Method of balancing the drum of a washing machine during the washing operation by using an apparatus according to claim 4, **characterised in that**, prior to rotating the drum at the washing speed, the pressing device distributes the weights (3) uniformly over the periphery of the track.

6. Method of balancing the drum of a washing machine during the spin-drying operation by using an apparatus according to claim 4, **characterised by** the following method steps:

   - accelerating the drum to a speed at which the washing abuts against the drum casing;
   - sensing the size and the position of the imbalance phenomenon caused by poor distribution of the washing;
   - retarding the weights (3) until they assume positions in which the overall moment of the weights (3) and the imbalance moment are approximately in equilibrium in respect of the axis of rotation of the drum; and

- accelerating the drum to a speed above the critical speed.

## Revendications

1. Dispositif pour équilibrer des corps rotatifs, notamment des tambours de lave-linge, comprenant au moins une glissière (1) en forme d'anneau tournant avec le corps et disposée de façon concentrique par rapport à l'axe de rotation de ce dernier, dans laquelle sont placés au moins deux poids (3), sachant que la glissière (1) est remplie d'un agent d'amortissement visqueux (2), et comprenant également un dispositif de mesure pour déterminer l'ampleur et l'emplacement du déséquilibre du corps, **caractérisé par** un dispositif de freinage stationnaire (4, 5) permettant de modifier l'emplacement d'au moins un poids (3) sur un angle de rotation de la glissière (1) qui dépend de l'ampleur et de l'emplacement du déséquilibre.

2. Dispositif pour équilibrer des corps rotatifs selon la revendication 1, **caractérisé en ce que** le dispositif de freinage est réalisé en tant que dispositif de pression, **en ce que** la glissière (1) est réalisée de façon élastique dans un segment de paroi tournant (1a), et **en ce que** le dispositif de pression (5) disposé de manière fixe par rapport au support du corps permet de réduire la section transversale de la glissière (1).

3. Dispositif pour équilibrer des corps rotatifs selon la revendication 1 ou 2, **caractérisé par** un capteur de champ magnétique pour relever la position des poids (3).

4. Dispositif pour équilibrer le tambour tournant dans la cuve de lessive d'un lave-linge selon la revendication 1 ou 3, **caractérisé en ce que** le dispositif de freinage est réalisé en tant que dispositif de pression, **en ce que** la glissière (1) qui est au moins prévue est située sur au moins l'une des surfaces de recouvrement du tambour, et **en ce que** le dispositif de pression (5) est placé sur la face intérieure correspondante de la surface de recouvrement de la cuve de lessive, et **en ce que** la viscosité de l'agent amortissant (2) et la taille des poids (3) sont dimensionnés de telle sorte qu'ils sont entraînés lorsque la vitesse de rotation est inférieure à la vitesse de rotation de lavage.

5. Procédé pour équilibrer le tambour d'un lave-linge pendant le lavage en utilisant un dispositif selon la revendication 4, **caractérisé en ce qu'**avant la rotation du tambour à la vitesse de rotation de lavage, le dispositif de pression répartit les poids (3) uniformément sur le pourtour de la glissière.

6. Procédé pour équilibrer le tambour d'un lave-linge pendant l'essorage en utilisant un dispositif selon la revendication 4, **caractérisé par** les étapes suivantes :

   - accélération du tambour pour l'amener à une vitesse de rotation à laquelle le linge est plaqué contre l'enveloppe du tambour ;
   - mesure de l'ampleur et relevé de l'emplacement du déséquilibre provoqué par une mauvaise répartition du linge ;
   - freinage des poids (3) jusqu'à ce qu'ils prennent des positions dans lesquelles le couple total des poids (3) et le couple du déséquilibre par rapport à l'axe de rotation du tambour s'équilibrent approximativement ;
   - accélération du tambour pour l'amener à une vitesse de rotation supérieure à la vitesse de rotation critique.

Fig.1

Fig.2

Fig. 3a

Fig. 3b

Fig. 3c